(19) Europäisches Patentamt
European Patent Office
Office européen des brevets

(11) **EP 1 685 001 B1**

(12) **EUROPÄISCHE PATENTSCHRIFT**

(45) Veröffentlichungstag und Bekanntmachung des Hinweises auf die Patenterteilung:
**11.06.2008 Patentblatt 2008/24**

(21) Anmeldenummer: **04762481.2**

(22) Anmeldetag: **22.07.2004**

(51) Int Cl.:
**B60Q 1/48** *(2006.01)* **B60K 31/00** *(2006.01)*
**G01S 13/93** *(2006.01)* **G01S 15/93** *(2006.01)*
**B60R 16/00** *(2006.01)* **G08G 1/16** *(2006.01)*

(86) Internationale Anmeldenummer:
**PCT/DE2004/001631**

(87) Internationale Veröffentlichungsnummer:
**WO 2005/051709 (09.06.2005 Gazette 2005/23)**

(54) **VORRICHTUNG ZUR DETEKTION VON BEWEGTEN OBJEKTEN**

DEVICE FOR DETECTING MOVING OBJECTS

DISPOSITIF POUR DETECTER DES OBJETS EN MOUVEMENT

(84) Benannte Vertragsstaaten:
**DE FR GB SE**

(30) Priorität: **12.11.2003 DE 10352800**

(43) Veröffentlichungstag der Anmeldung:
**02.08.2006 Patentblatt 2006/31**

(73) Patentinhaber: **ROBERT BOSCH GMBH**
**70442 Stuttgart (DE)**

(72) Erfinder:
• **DANZ, Christian**
**70469 Stuttgart (DE)**
• **GE, Jie**
**70499 Stuttgart-Hausen (DE)**

(56) Entgegenhaltungen:
**DE-A- 4 228 794**    **DE-A- 10 160 299**
**DE-C- 19 526 452**   **US-A- 5 450 057**
**US-A- 5 572 484**    **US-A- 5 754 123**
**US-A- 5 777 563**

**Beschreibung**

Die vorliegende Erfindung betrifft eine Vorrichtung zur Detektion von bewegten Objekten, die sich in einem toten Winkel eines Fahrzeugs aufhalten, wobei die Vorrichtung mindestens einen Objektdetektionssensor aufweist, der beim Ausparken des Fahrzeugs aus einer Parklücke den Abstand bewegter Objekte, die sich quer zum Fahrzeug bewegen, detektiert und einer Auswerteeinrichtung zuführt und die Auswerteeinrichtung aus dem ihr zugeführten Abstand die Relativgeschwindigkeit ermittelt und in Abhängigkeit des Abstands, der Relativgeschwindigkeit und der eigenen Fahrzeuggeschwindigkeit eine Warneinrichtung aktiviert wird, die den Fahrer über das quer zum eigenen Fahrzeug bewegte Objekt informiert.

Stand der Technik

Aus dem Buch "Autoelektrik, Autoelektronik", erschienen im Vieweg-Verlag, 1998, sind aus den Seiten 283-285 im Kapitel "Einparksysteme" Ultraschalleinparkhilfen bekannt, die den Fahrer eines Kraftfahrzeugs beim Einparken in eine Parklücke unterstützen.

Weiterhin sind aus dem Stand der Technik Systeme bekannt, die den toten Winkel eines Fahrzeugs überwachen und den Fahrer informieren, falls ein Objekt im toten Winkel des eigenen Fahrzeugs erkannt wird. Eine derartige Einrichtung ist beispielsweise aus der DE 42 28 794 A1 bekannt.

Aus der gattungsbildenden DE 195 26 452 C1 ist eine Seitenrückraumüberwachungseinrichtung mit einer Objekterfassungseinheit zur Erfassung von Objekten in einem Seitenrückraumbereich, eine Warnanzeigeeinheit und eine Auswerteeinheit, welche die Warnanzeigeeinheit in Abhängigkeit von den Signalen der Objekterfassungseinheit und einer erkannten Fahrspurwechselanforderung zur Abgabe eines Warnsignals aktiviert, bekannt. Die Auswerteeinheit bestimmt, ob sich ein Objekt im Totwinkelabschnitt befindet oder sich ein Objekt in einem rückwärtig darüber hinausreichenden Seitenrückraumabschnitt mit größerer Geschwindigkeit als das eigene Fahrzeug bewegt, und aktiviert bejahendenfalls die Warnanzeigeeinheit zur Abgabe eines Warnsignals, wenn sie zusätzlich eine zu diesem Seitenbereich gehörige Fahrspurwechselanforderung erkennt. Es werden Fahrspurwechselanforderungen bevorzugt über die Blinkgeberstellung oder die Lenkwinkeleinstellung erkannt. Vorzugsweise ist ein Blinkgeber mit zusätzlicher, dritter Schaltstufe vorgesehen, in welcher die Abgabe von Warnsignalen unterbleibt, so daß der Benutzer die Warnsignalfunktion auf Wunsch inaktiv halten kann.

Aus der US 5,754,123 ist Einparkhilfesystem bekannt, das bei eingelegtem Rückwärtsgang aktiviert ist. Mittels Ultraschallsensoren am Fahrzeugheck werden Objekte im Nahbereich lückenlos hinsichtlich ihres Abstandes erkannt und ausgewertet. Mittels zweier Radarsensoren werden Objekte jenseits des Ultraschaller-fassungsbereichs erkannt Bei niedrigen Geschwindigkeiten oder beim Betrieb im Einpark-Modus wird die Radarinformation ignoriert und nur die Information der Ultraschallsysteme ausgewertet. Bei höheren Geschwindigkeiten werden die Informationen beider Systeme ausgewertet.

Aus der US 5,572,484 ist eine kurzreichweitige Ultraschall-Abstandswarnanlage in einem Kraftfahrzeug bekannt, die insbesondere als Einparkhilfe dient. Diese ist als Anlage mit heckseitigen und frontseitigen Sender- und Empfängeranordnungen, die auch die Eckbereiche erfassen, mit einem diese aktivierenden und deaktivierenden Steuergerät und mit Warnelementen zur kombinierten optischen und/oder akustischen Warnanzeige ausgeführt, wobei die Systemaktivierung fahrerangefordert, z. B. mit dem Einlegen des Rückwärtsgangs, der Betätigung der Zündung oder einer Türschließanlage oder über eine Fernsteuerung erfolgt. Bei dieser Ultraschall-Abstandswarnanlage ist das Gesamtsystem bei eingelegtem Rückwärtsgang und niedriger Geschwindigkeit aktiv, wobei es sich bei höherer Geschwindigkeit selbsttätig deaktiviert. Bei nicht eingelegtem Rückwärtsgang ist nur der Anlagenteil zur Frontraumüberwachung bei niedriger Fahrgeschwindigkeit aktiv, während sich das System bei höherer Geschwindigkeit wiederum selbsttätig inaktiviert hält.

Aus der US 5,777,563 ist ein Objekterkennungssystem bekannt, bei dem mit einem Sender und einem Empfänger die Existenz und der Ort eines Objektes in Bezug auf das Fahrzeug erkannt werden und in Abhängigkeit der Messergebnisse eine hörbare oder sichtbare Fahrerwarnung ausgegeben wird.

Aus der US 5,450,057 ist ein stereoakustische Fahrerwarneinrichtung mit einem Objekterkennungssystem bekannt. Erkennt das Objekterkennungssystem die Dringlichkeit eines um das Fahrzeug befindlichen Objekts, so wird mittels mehreren Lautsprechern ein Warnsignal ausgegeben, das für den Fahrer scheinbar aus der Richtung kommt, in der das dringliche Objekt erkannt wurde und der Warnton zusätzlich in Abhängigkeit vom Grad der Dringlichkeit verändert wird.

Aus der DE 10160 299 A1 ist ein Verfahren sowie ein System zum Detektieren mindestens eines Objekts, insbesondere zum Detektieren von dessen spezifischen Parametern, wie etwa der Relativposition des Objekts oder der Relativgeschwindigkeit des Objekts bekannt, bei dem, die zu detektierenden Objekte hinsichtlich ihrer räumlichen Dimensionierung, insbesondere hinsichtlich ihrer Lateralausdehnung, klassifiziert werden können. Weiterhin ist vorgesehen, daß die räumliche, insbesondere die laterale Ausdehnung des Objekts mittels mindestens dreier abstandsauflösender, insbesondere an einem Fortbewegungsmittel angebrachter Sensoreinheiten erfaßt wird.

Kern und Vorteile der Erfindung

Der Kern der vorliegenden Erfindung ist es, eine Vorrichtung in einem Kraftfahrzeug, die zur Tote-Winkel-Detektion von Objekten geeignet ist, dahingehend weiterzuentwickeln, dass diese beim Ausparken aus einer Parklücke querfahrende Fahrzeuge erkennt und den Fahrer sowohl warnt, als auch durch weitere Funktionen unterstützt. Erfindungsgemäß wird dieses durch die Merkmale des unabhängigen Anspruchs gelöst. Vorteilhafte Weiterbildungen und Ausgestaltungen ergeben sich aus den Unteransprüchen.

Vorteilhafter Weise sind in Abhängigkeit des Abstands, der Relativgeschwindigkeit und der eigenen Fahrzeuggeschwindigkeit die Verzögerungseinrichtungen durch die Auswerteeinrichtung aktivierbar.

Vorteilhafter Weise ist der Objektdetektionssensor ein Radarsensor, ein Ultraschallsesor, ein Lasersensor, ein Videosensor oder eine Kombination hieraus.

Vorteilhafter Weise ist der Radarsensor als Pulsradarsensor ausgebildet.

Weiterhin ist es vorteilhaft, dass der mindestens eine Objektdetektionssensor von außen unsichtbar in der Stoßstange des Fahrzeugs integriert ist.

Vorteilhafter Weise ist der Objektdetektionssensor an Fahrzeugecken angebracht und weist zur Fahrzeuglängsachse einen Winkel von etwa 45° auf.

Weiterhin ist es vorteilhaft, dass die Warnfunktion bei Ausparkvorgängen aktiviert wird, wenn der Fahrer den Rückwärtsgang einlegt.

Weiterhin ist es vorteilhaft, dass die Warnfunktion bei Ausparkvorgängen aktiviert wird, wenn der Motor eingeschaltet wird und sich das Fahrzeug noch im Stillstand befindet.

Weiterhin ist es vorteilhaft, dass die Warnfunktion bei Ausparkvorgängen durch eine fahrerbetätigbare Bedieneinrichtung vorübergehend bis zur erneuten Nutzung dieser Funktion abschaltbar ist.

Gemäß einer weiteren Ausgestaltung der Erfindung ist dem Fahrer mittels einer Anzeigeeinrichtung mitteilbar, ob die Vorrichtung aktiviert ist, oder nicht.

Vorteilhafter Weise ist durch die Auswerteeinrichtung eine Warnung ausgebbar, wenn die Geschwindigkeit des eigenen Fahrzeugs einen vorgegebenen Geschwindigkeitsschwellenwert überschreitet.

Weiterhin ist es vorteilhaft, dass die Warneinrichtung dem Fahrer eine optische, akustische oder optisch und akustische Warnung ausgibt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

Zeichnungen

Nachfolgend werden Ausführungsbeispiele der Erfindung anhand von Zeichnungen erläutert. Es zeigen

Figur 1 eine beispielhafte Verkehrssituation, in der die erfindungsgemäße Vorrichtung vorteilhaft anwendbar ist,

Figur 2 ein schematisches Blockdiagramm eines Ausführungsbeispiels der erfindungsgemäßen Vorrichtung und

Figur 3 ein Ablaufdiagramm, wie es in der erfindungsgemäßen Vorrichtung vorgesehen ist.

Beschreibung von Ausführungsbeispielen

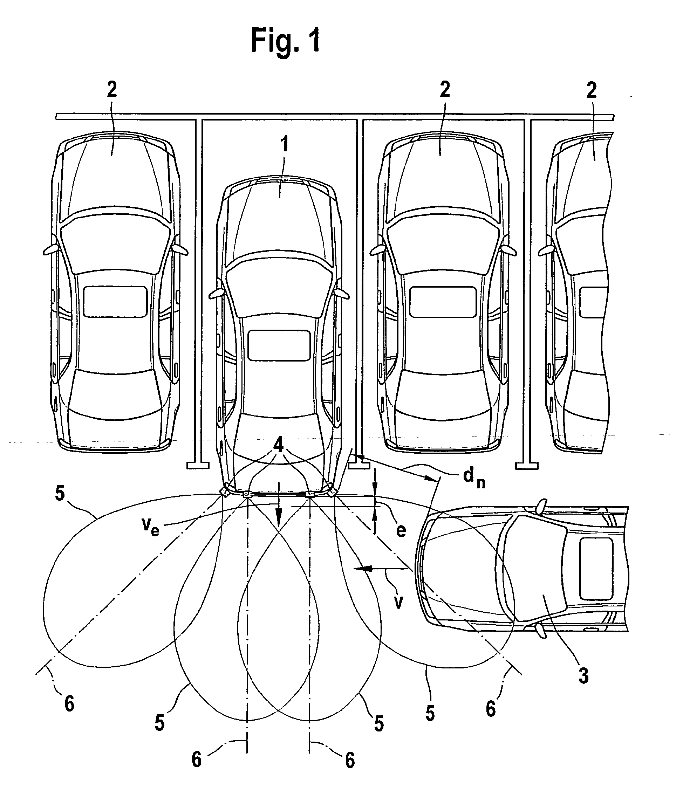

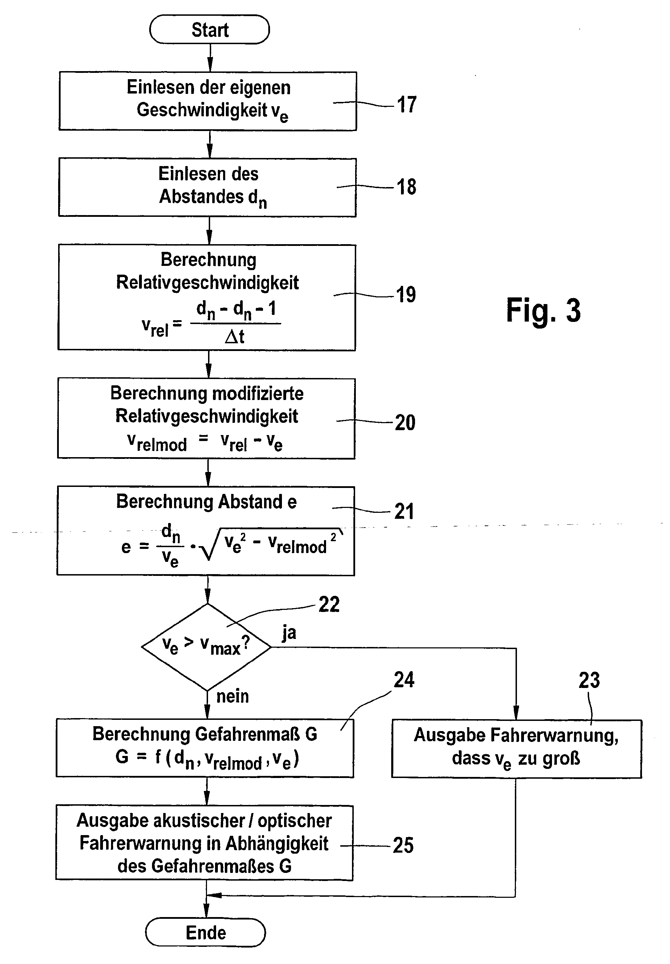

In Figur 1 ist eine Verkehrssituation dargestellt, in der das eigene Fahrzeug 1 aus einer Parklücke ausgeparkt wird, wobei neben dem eigenen Fahrzeug 1 weitere Fahrzeuge 2 geparkt sind. Weiterhin ist ein querfahrendes Fahrzeug 3 dargestellt, das entlang der geparkten Fahrzeuge 2 vorbeifährt und den Ausparkvorgang des eigenen Fahrzeugs 1 hierdurch gefährdet. Erfindungsgemäß ist das eigene Fahrzeug 1 mit mindestens einem Objektdetektionssensor 4 ausgestattet; in dem dargestellten Beispiel weist das Fahrzeug 1 insgesamt vier Objektdetektionssensoren auf. Diese Objektdetektionssensoren sind an der Rückseite des Fahrzeugs 1 angeordnet, und zwar so, dass an jeder hinteren Fahrzeugecke jeweils ein Sensor so angebracht ist, dass dessen Sensorhauptachse 6 einen 45°-Winkel zur Fahrzeuglängsachse aufweist. Weitere zwei Objektdetektionssensoren 4 sind an der Rückseite angebracht, wobei deren Sensorhauptachsen 6 parallel zur Fahrzeuglängsachse ausgerichtet sind. Hierdurch ergibt sich ein Detektionsbereich, wie er durch die vier Sensorerfassungsbereiche 5 dargestellt ist, indem sich die Sensorerfassungsbereiche 5 teilweise überlappen und somit den gesamten rückwärtigen Raum hinter dem Fahrzeug 1 abdecken, sowie weiterhin noch Bereiche abdecken, die seitlich hinter dem fahrzeugrückwärtigen Raum angeordnet sind. Die Sensoren sind in der Lage, den Abstand erkannter Objekte im Sensorerfassungsbereich 5 sowie deren Relativgeschwindigkeit zu erfassen. Ebenfalls ist es möglich, dass die Sensoren 4 lediglich den Abstand von Objekten zum eigenen Fahrzeug 1 messen und die Relativgeschwindigkeit der erkannten Objekte 3 durch die Bildung des Differenzenquotienten nach der Zeit aus dem Abstand ableiten. Weiterhin ist es möglich, einen Abstand e zu bestimmen, in dem das querfahrende Fahrzeug 3, das als Objekt erkannt wurde, an dem Heck des eigenen Fahrzeugs 1 vorbeifährt. Der Abstand e repräsentiert den senkrechten Abstand zwischen dem Heck des eigenen Fahrzeugs 1 und der verlängerten Fahrlinie des querfahrenden Fahrzeugs 3. Auf die Berechnung dieses Abstandes e wird in Figur 3 näher eingegangen. Erfindungsgemäß wird die Vorrichtung aktiviert, wenn entweder die Zündung des Fahrzeugs eingeschaltet wird, oder aber, wenn bei eingeschalteter Zündung der Rückwärtsgang eingeschaltet wird. Bei dieser Einschaltbedingung erkennt die Vorrichtung, dass der Fahrer das eigene Fahrzeug 1 rückwärts bewegen möchte, um dieses beispielsweise aus einer Parklücke heraus zu bewegen. Bei Vorliegen dieser Einschaltbedingungen werden die Sensoren aktiviert und messen mittels Ultraschallwellen, Radarwellen, Laserstrahlung oder mittels eines Bildaufnahmesystems den Abstand zu Objekten, die sich in den Sensorerfassungsbereichen 5 befinden oder in diese hinein bewegen. Wird erfindungsgemäß ein Fahrzeug 3 erkannt, das beispielsweise in Querrichtung an den parkenden Fahrzeugen 2 vorbei fährt und vom Fahrer des eigenen Fahrzeugs 1 nicht erkannt wird, so erzeugt eine Auswerteeinrichtung, der die Signale der Objektdetektionssensoren 4 zugeführt werden, ein akustisches, optisches oder sowohl ein akustisches und optisches Warnsignal, das den Fahrer darauf hinweist, dass ein querfahrendes Fahrzeug 3 detektiert wurde. Ebenfalls ist es möglich, dass die Auswerteeinrichtung die Verzögerungseinrichtungen des Fahrzeugs 1 aktivieren und das eigene Fahrzeug 1 bis in den Stand abbremsen, um eine Kollision mit dem querfahrenden Fahrzeug 3 zu vermeiden.

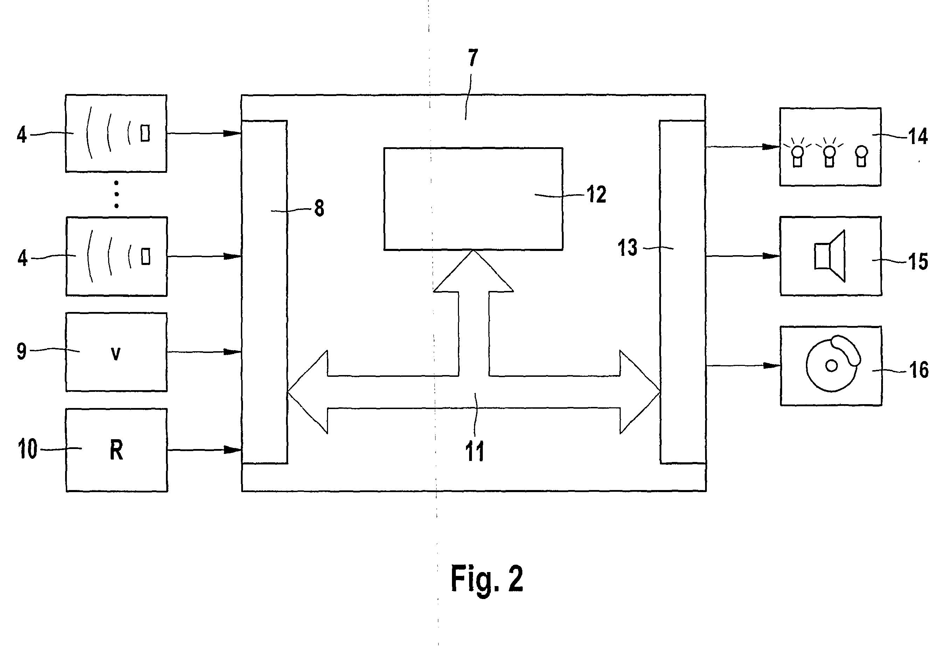

In Figur 2 ist ein Blockschaltbild dargestellt. Zu erkennen ist die Steuervorrichtung 7, die unter anderem über eine Eingangsschaltung 8 verfügt. Mittels der Eingangsschaltung 8 werden der Steuervorrichtung 7 Eingangssignale zugeführt. Als Eingangssignal ist das Signal mindestens eines Objektdetektionssensors 4 vorgesehen, im dargestellten Beispiel verfügt das Fahrzeug 1 über vier derartige Objektdetektionssensoren 4, die ihre Signale der Eingangsschaltung 8 zuführen. Weiterhin wird der Eingangsschaltung 8 ein Geschwindigkeitssignal von einem Geschwindigkeitssensor 9 zugeführt, das die Geschwindigkeit des eigenen Fahrzeugs 1 misst und der Steuervorrichtung 7 zuführt. Weiterhin können der Eingangsschaltung 8 weitere Signale zuführbar sein, beispielsweise Ein-/Ausschaltsignale oder Steuersignale von fahrerbetätigbaren Bedienelementen oder ein Rückwärtsfahrsignal eines Rückwärtsfahrschalters 10, der erkennt, ob der Rückwärtsgang des Fahrzeugs eingelegt ist. Ebenfalls ist es denkbar, dass der Eingangsschaltung 8 ein Signal zugeführt wird, sobald die Zündung des Fahrzeugs eingeschaltet wird. Die Eingangsschaltung 8 leitet die Eingangssignale mittels eines Datenaustauschsystems 11 an eine Berechnungseinrichtung 12 weiter, in der aus den Eingangssignalen Stellsignale ermittelt werden, die an nachgeordnete Stellelemente ausgegeben werden und die in Abhängigkeit der Eingangssignale gesteuert werden. Die von der Berechnungseinrichtung 12 ermittelten Stellsignale werden mittels des Datenaustauschsystems 11 an eine Ausgangsschaltung 13 ausgegeben, die beispielsweise eine optische Abstandsanzeige 14 ansteuert, auf der der Abstand des erkannten Objektes oder die Gefährdung, die von dem detektierten Objekt ausgeht, angezeigt wird. Dies kann beispielsweise mittels farbiger Leuchtdioden geschehen, wobei mit steigendem Gefährdungsmaß eine steigende Anzahl an Leuchtdioden aktiviert wird. Weiterhin kann mittels der Ausgangsschaltung 13 eine akustische Warneinrichtung 15 aktiviert werden, die den Fahrer mittels eines Warntons oder einer Sprachausgabe auf die drohende Gefährdung von erkannten Objekten hinweist. Bei der Aktivierung der akustischen Warneinrichtung 15 bzw. der optischen Abstandsanzeige 14 ist es vorteilhaft, dass sowohl der Abstand dn des erkannten Objekts zum eigenen Fahrzeug 1, die Relativgeschwindigkeit vrel des bewegten Objektes sowie der senkrechte Abstand e des querfahrenden Fahrzeugs 3 zu dem Heck des eigenen Fahrzeugs 1 zur Ermittlung eines Gefährdungspotentials G berücksichtigt wird und in Abhängigkeit des Gefährdungspotentials G diese Warneinrichtungen aktiviert werden. So führt beispielsweise eine hohe Relativgeschwindigkeit des querfahrenden Fahrzeugs 3 auch zu einem erhöhten Gefährdungspotential G, sowie ein kleiner Abstand e ebenfalls zu einer Erhöhung des Gefährdungspotentials G führt. Das Gefährdungspotential G wird ebenfalls durch einen sinkenden Abstand dn des quer fahrenden Fahrzeugs 3 zum eigenen Fahrzeug 1 erhöht. Weiterhin kann vorgesehen sein, dass der Fahrer des eigenen Fahrzeugs 1 die Steuervorrichtung 7 mittels eines fahrerbedienbaren Betätigungselements zeitweise deaktiviert, beispielsweise, dass lediglich für den bevorstehenden Ausparkvorgang diese Warnfunktion deaktiviert wird, jedoch beim darauffolgenden Ausparkvorgang wieder die Warnfunktion zur Verfügung steht. Ebenfalls kann es vorgesehen sein, dass die Steuervorrichtung 7 die Verzögerungseinrichtungen 16 des Fahrzeugs ansteuern kann, so dass beispielsweise bei einem hohen Gefährdungspotential, das durch ein querfahrendes Fahrzeug 3 erzeugt wird, automatisch das eigene Fahrzeug 1 in den Stillstand abgebremst wird.

In Figur 3 ist ein Ablaufdiagramm dargestellt, nach dem die erfindungsgemäße Funktion abläuft. Nach dem Start der Funktion, die beispielsweise durch das Einlegen des Rückwärtsgangs oder durch das Aktivieren der Fahrzeugzündung ausgelöst wurde, wird in einem ersten Schritt 17 die eigene Geschwindigkeit $V_e$ eingelesen. Im darauf folgenden Schritt 18 wird der Abstand dn eines im Objektdetektionsbereich 5 befindlichen Objektes, beispielsweise eines querfahrenden Fahrzeugs 3, ermittelt. Dies kann beispielsweise mittels eines Pulsradars und einer Laufzeitmessung erfolgen. Im nächsten Schritt 19 wird aus dem ermittelten Abstand dn sowie aus dem ermittelten Abstand dn-1, der im vorhergehenden Messzyklus bestimmt wurde, die Relativgeschwindigkeit vrel des quer fahrenden Fahrzeugs 3 bezüglich des Objektdetektionssensors 4 des eigenen Fahrzeugs 1 ermittelt. Hierzu werden die Abstände dn und dn-1 voneinander subtrahiert und durch den Zeitwert $\Delta t$ dividiert, wobei die Zeitdauer $\Delta t$ die Zeit zwischen zwei Messpulsen, also zweier unmittelbar aufeinander folgender Messpulse repräsentiert. Im nächsten Schritt 20 wird aus der ermittelten Relativgeschwindigkeit eine modifizierte Relativgeschwindigkeit $V_{relmod}$ ermittelt, indem von der be-

rechneten Relativgeschwindigkeit $V_{rel}$, die mit einem Faktor f multiplizierte Eigengeschwindigkeit des Fahrzeugs $V_e$ subtrahiert wird. Der Faktor f hat vorteilhafter Weise einen Wert von maximal 0,7, kann aber auch kleinere Werte annehmen. Durch die Subtraktion der mit dem Faktor f multiplizierten Eigengeschwindigkeit $V_e$ des eigenen Fahrzeugs 1 wird bei der Berechnung der modifizierten Relativgeschwindigkeit $V_{relmod}$ die Eigengeschwindigkeit des Fahrzeugs $V_e$ mit berücksichtigt, wodurch die Wahrscheinlichkeit von Fehlwarnungen bei stehenden Objekten in der Querrichtung verringert werden kann. Im folgenden Schritt 21 wird der Abstand e ermittelt, der den senrechten Abstand der verlängerten Fahrlinie des querfahrenden Fahrzeugs 3 zu dem Heck des eigenen Fahrzeugs 1 darstellt. Unter den Annahmen, dass die Geschwindigkeit des erkannten Objekts 3 zwischen zwei Messintervallen konstant ist, dass der Abstand e über die Zeit zwischen zwei Messintervallen ebenfalls konstant ist sowie, dass die eigene Geschwindigkeit $V_e$ bezüglich der Gesamtrelativgeschwindigkeit $V_{rel}$ vernachlässigbar gering ist, kann der azimutale Winkel, unter dem sich das querfahrende Fahrzeug 3 zum eigenen Fahrzeug 1 bewegt, näherungsweise durch die Veränderung der Relativgeschwindigkeit $V_{rel}$, die sich in Folge veränderlicher Adsimutwinkel ergibt, ermittelt werden. Hierdurch lässt sich auch der Abstand e ermitteln, indem unter den oben genannten Annahmen der Abstand e berechnet wird zu

$$e = \frac{d_n}{v_e} * \sqrt{v_e^2 - v_{rel\,mod}^2}$$

Dieser Abstand e wird zur Ermittlung eines Gefahrenmaßes G berücksichtigt, zu dem auch der Abstand dn des Objekts 3 zum eigenen Fahrzeug 1, wie auch die modifizierte Relativgeschwindigkeit $V_{relmod}$ herangezogen werden.

Da für das beschriebene Verfahren nur geringe Eigengeschwindigkeiten des Fahrzeugs 1 zulässig sind, da ansonsten die Leistungsgrenze des Berechnungsverfahrens überschritten wird, wird in Schritt 22 überprüft, ob die Geschwindigkeit des eigenen Fahrzeugs $V_e$ größer ist, als ein vorgebbarer Maximalgeschwindigkeitswert $V_{max}$, der beispielsweise zu etwa Ve=6 km/h gewählt wird. Ist die Geschwindigkeit $V_e$ des eigenen Fahrzeugs 1 größer als dieser vorgebbare Geschwindigkeitsschwellwert $V_{max}$, so verzweigt das Verfahren in Block 22 nach "JA" und es wird in Block 23 der Fahrer mittels einer Warnung darauf hingewiesen, dass die Geschwindigkeit $V_e$ des eigenen Fahrzeugs 1 zu groß ist und die Leistungsfähigkeit des Systems überschritten ist. Diese Fahrerwarnung kann beispielsweise akustisch oder optisch erfolgen oder gemäß einer weiteren Ausgestaltung das Fahrzeug automatisch auf den Maximalgeschwindigkeitswert $V_{max}$ begrenzt werden, beispielsweise durch eine derartige Ansteuerung der Verzögerungseinrichtungen, dass Vmax nicht überschritten wird oder durch eine automatische Drosselung der Motorleistung des Fahrzeugs 1. Wurde in Block 22 ermittelt, dass die Geschwindigkeit $V_e$ des eigenen Fahrzeugs 1 kleiner oder gleich der Maximalgeschwindigkeitsschwelle $V_{max}$ ist, so verzweigt Block 22 nach "NEIN" und es wird in Block 24 ein Gefahrenmaß G ermittelt, das in Abhängigkeit des Abstands dn, der modifizierten Relativgeschwindigkeit $V_{relmod}$, der Eigengeschwindigkeit $V_e$ sowie des Abstandes e des querfahrenden Objekts 3 zu den fahrbahnbegrenzenden Objekten 2 bestimmt. Hierzu können beispielsweise die Bewegungen des eigenen Fahrzeugs 1 sowie des querfahrenden Fahrzeugs 3 in die Zukunft vorausberechnet werden und eine Zeitdauer bis zu einer berechneten Kollision ermittelt werden oder ein Fahrweg bis zu einer berechneten Kollision ermittelt werden. In Abhängigkeit der verbleibenden Zeit oder des verbleibenden Fahrweges oder bei Überschreiten des Gefahrenmaßes G über eine Grenzschwelle $G_{max}$ wird gemäß dem weiteren Block 25 eine akustische oder optische Fahrerwarnung ausgegeben. Ebenfalls ist es auch hier möglich, zusätzlich zu der akustischen oder optischen Fahrerwarnung oder zu einer akustischen und optischen Fahrerwarnung die Verzögerungsmittel des eigenen Fahrzeugs 1 anzusteuern, um eine Kollision mit dem querfahrenden Fahrzeug 3 zu vermeiden. Nach Block 23 bzw. Block 25 verzweigt das Diagramm nach ENDE und beginnt im Sinne einer Endlosschleife wieder von Neuem bei START, solange die vorgegebenen Einschaltbedingungen für die Warnfunktion vorliegen. Dies kann beispielsweise sein, so lange der Rückwärtsgang des Fahrzeugs eingelegt ist. Wird bei beendetem Ausparkvorgang eine Fahrstufe eingelegt, die das Fahrzeug in Vorwärtsrichtung bewegt, so wird das Verfahren beendet und ein normaler Fahrbetrieb aufgenommen, indem der Sensor beispielsweise nur noch zur Tote-Winkel-Detektion verwendet wird.

**Patentansprüche**

1. Vorrichtung zur Detektion von bewegten Objekten, die sich in einem toten Winkel eines Fahrzeugs (1) aufhalten, wobei die Vorrichtung mindestens einen Objektdetektionssensor (4) aufweist, der beim Ausparken des Fahrzeugs (1) aus einer Parklücke den Abstand (dn) eines Fahrzeugs (3), das sich quer zum eigenen Fahrzeug (1) bewegt, detektiert und die Sensorausgangssignale einer Auswerteeinrichtung (7) zuführt,
   **dadurch gekennzeichnet, dass**
   an zwei unmittelbar aufeinander folgenden Messpulsen Abstände (dn-1, dn) ermittelt werden und die Auswerteeinrichtung (7) aus aus den ihr zugeführten Abständen (dn-1, dn) und aus der Zeitdauer (Δt) zwischen den zwei unmittelbar aufeinander folgenden Messpulsen die Relativgeschwindigkeit (vrel) des querfahrenden Fahrzeugs (3) zum eigenen Fahrzeug und dann in Abhängigkeit des Abstands (dn), der Relativgeschwindigkeit (vrel) und der eigenen Fahrzeuggeschwindigkeit (ve) den senkrechten Abstand (e) zwischen dem Heck des eigenen Fahrzeugs und der verlängerten Fahrlinie des querfahrenden Fahrzeugs (3) berechnet, wobei der senkrechte Abstand (e) zur Ermittlung eines Gefahrenmaßes (G) herangezogen wird und wobei bei einem Überschreiten einer Grenzwertschwelle durch das Gefahrenmaß (G) eine Warneinrichtung (14,15) aktiviert wird, die den Fahrer über das quer zum eigenen Fahrzeug (1) fahrende Fahrzeug (3) informiert.

2. Vorrichtung nach Anspruch 1, **dadurch gekennzeichnet, dass** in Abhängigkeit des Abstands (dn), der Relativgeschwindigkeit (vrel) und der eigenen Fahrzeuggeschwindigkeit (Ve) die Verzögerungseinrichtungen (16) durch die Auswerteeinrichtung (7) aktivierbar sind.

3. Vorrichtung nach einem der vorhergehenden Ansprüchen, **dadurch gekennzeichnet, dass** der Objektdetektionssensor (4) ein Radarsensor, ein Ultraschallsensor, ein Lasersensor, ein Videosensor oder ein Kombination hieraus ist.

4. Vorrichtung nach Anspruch 3, **dadurch gekennzeichnet, dass** der Radarsensor ein Pulsradarsensor ist.

5. Vorrichtung nach einem der vorhergehenden Ansprüche, **dadurch gekennzeichnet, dass** der mindestens eine Objektdetektionssensor (4) von aussen unsichtbar in der Stossstange des Fahrzeugs (1) integriert ist.

6. Vorrichtung nach einem der vorhergehenden Ansprüche, **dadurch gekennzeichnet, dass** der Objektdetektionssensor (4) an Fahrzeugecken angebracht ist und zur Fahrzeuglängsachse einen Winkel von etwa 45° aufweist.

7. Vorrichtung nach einem der vorhergehenden Ansprüche, **dadurch gekennzeichnet, dass** die Warneinrichtung (14,15) bei Ausparkvorgängen aktiviert wird, wenn der Fahrer den Rückwärtsgang (10) einlegt.

8. Vorrichtung nach einem der Ansprüche 1 bis 6, **dadurch gekennzeichnet, dass** die Warneinrichtung (14,15) bei Ausparkvorgängen aktiviert wird, wenn der Motor eingeschaltet wird und sich das Fahrzeug (1) noch im Stillstand befindet.

9. Vorrichtung nach einem der vorhergehenden Ansprüche, **dadurch gekennzeichnet, dass** die Warneinrichtung (14,15) bei Ausparkvorgängen durch eine fahrerbetätigbare Bedieneinrichtung vorübergehend bis zur erneuten Nutzung dieser Funktion abschaltbar ist.

10. Vorrichtung nach einem der vorhergehenden Ansprüche, **dadurch gekennzeichnet, dass** dem Fahrer mittels einer Anzeigeeinrichtung (14) mitgeteilt wird, ob die Vorrichtung aktiviert ist oder nicht.

11. Vorrichtung nach einem der vorhergehenden Ansprüche, **dadurch gekennzeichnet, dass** eine Warnung äusgebbar ist, wenn die Geschwindigkeit (Ve) des eigenen Fahrzeugs (1) eine vorgegebene Geschwindigkeitsschwelle (Vmax) überschreitet.

12. Vorrichtung nach einem der vorhergehenden Ansprüche, **dadurch gekennzeichnet, dass** die Auswerteeinrichtung (7) dem Fahrer eine optische (14) und/oder akustische (15) Warnung ausgibt.

## Claims

1. Device for detecting moving objects which are located in a blind spot of a vehicle (1), wherein the device has at least one object detection sensor (4) which, when the vehicle (1) is moving out of a parking space, detects the distance (dn) between a vehicle (3) which is moving transversely with respect to the driver's own vehicle (1) and feeds the sensor output signals to an evaluation device (7), **characterized in that** distances (dn-1, dn) are determined at two directly successive measurement pulses, and the evaluation device (7) calculates the relative velocity (vrel) of the transversely travelling vehicle (3) with respect to the driver's own vehicle from the distances (dn-1, dn) which are fed to said evaluation device (7) and from the time period ($\Delta t$) between the two directly successive measurement pulses, and said evaluation device (7) then calculates the vertical distance (e) between the rear of the driver's own vehicle and the extended travel line of the transversely travelling vehicle (3) as a function of the distance (dn), the relative velocity (vrel) and the velocity (Ve) of the driver's own vehicle, wherein the vertical distance (e) is used to determine a hazard measure (G), and wherein, when a limiting value threshold is exceeded by the hazard measure (G), a warning device (14, 15) which informs the driver about the vehicle (3) which is travelling transversely with respect to the driver's own vehicle (1) is activated.

2. Device according to Claim 1, **characterized in that** the deceleration devices (16) can be actuated by the evaluation device (7) as a function of the distance (dn), the relative velocity (vrel) and the velocity (Ve) of the driver's own vehicle.

3. Device according to one of the preceding claims, **characterized in that** the object detection sensor (4) is a radar sensor, an ultrasonic sensor, a laser sensor, a video sensor or a combination thereof.

4. Device according to Claim 3, **characterized in that** the radar sensor is a pulse radar sensor.

5. Device according to one of the preceding claims, **characterized in that** the at least one object detection sensor (4) is integrated into the bumper of the vehicle (1) in such a way that it cannot be seen from the outside.

6. Device according to one of the preceding claims, **characterized in that** the object detection sensor (4) is mounted on vehicle corners and has an angle of approximately 45° with respect to the longitudinal axis of the vehicle.

7. Device according to one of the preceding claims, **characterized in that** the warning device (14, 15) is activated when the driver engages the reverse gear (10) during manoeuvres for leaving a parking space.

8. Device according to one of Claims 1 to 6, **characterized in that** the warning device (14, 15) is activated during manoeuvres for leaving a parking space when the engine is switched on and the vehicle (1) is still in the stationary stage.

9. Device according to one of the preceding claims, **characterized in that** during manoeuvres for leaving a parking space the warning device (14, 15) can be switched off temporarily by a driver-activated operating control device until this function is used again.

10. Device according to one of the preceding claims, **characterized in that** a display device (14) informs the driver whether or not the device is activated.

11. Device according to one of the preceding claims, **characterized in that** a warning can be issued if the velocity (Ve) of the driver's own vehicle (1) exceeds a predefined velocity threshold (Vmax).

12. Device according to one of the preceding claims, **characterized in that** the evaluation device (7) issues a visual warning (14) and/or an audible warning (15) to the driver.

**Revendications**

1. Dispositif de détection d'objets en mouvement qui séjournent dans l'angle mort d'un véhicule automobile (1),

le dispositif comportant au moins un capteur de détection d'objets (4) qui, lors du dégagement du véhicule (1) hors d'un emplacement de stationnement, détecte la distance (dn) d'un véhicule (3) qui se déplace transversalement au propre véhicule (1) et fournit des signaux de sortie de capteur à une installation d'exploitation (7),
**caractérisé en ce que**
par deux impulsions de mesure qui se suivent directement, on détermine les distances (dn-1, dn), et l'installation d'exploitation (7), à partir des distances (dn-1, dn) qui lui sont fournies et de la durée (Δt) entre les deux impulsions de mesure qui se suivent directement, calcule la vitesse relative (vrel) du véhicule (3) circulant transversalement par rapport au propre véhicule, puis en fonction de la distance (dn), de la vitesse relative (vrel) et de la vitesse propre du véhicule (ve), calcule la distance perpendiculaire (e) entre l'arrière du propre véhicule et le prolongement de la ligne de circulation du véhicule (3) circulant transversalement,
la distance perpendiculaire (e) étant utilisée pour déterminer une mesure de risque (G), et
en cas de dépassement d'un seuil limite par la mesure de risque (G), une installation d'avertissement (14, 15) est activée pour informer le conducteur qu'il y a un véhicule (3) qui circule transversalement à son propre véhicule (1).

2. Dispositif selon la revendication 1,
**caractérisé en ce qu'**
en fonction de la distance (dn), de la vitesse relative (vrel) et de la vitesse du propre véhicule (ve), l'installation d'exploitation (7) active les installations de temporisation (16).

3. Dispositif selon l'une des revendications précédentes,
**caractérisé en ce que**
le capteur de détection d'objet (4) est un capteur radar, un capteur à ultrasons, un capteur laser, un capteur vidéo ou une combinaison de tels capteurs.

4. Dispositif selon la revendication 3,
**caractérisé en ce que**
le capteur radar est un capteur radar impulsionnel.

5. Dispositif selon l'une des revendications précédentes,
**caractérisé en ce qu'**
au moins un capteur de détection d'objet (4) est intégré de manière invisible de l'extérieur dans le pare-chocs du véhicule (1).

6. Dispositif selon l'une des revendications précédentes,
**caractérisé en ce que**
le capteur de détection d'objet (4) est installé au coin du véhicule et présente un angle d'environ 45° par rapport à l'axe longitudinal du véhicule.

7. Dispositif selon l'une des revendications précédentes,
   **caractérisé en ce que**
   l'installation de détection (14, 15) est activée au cours des manoeuvres de sortie d'emplacement de stationnement lorsque le conducteur passe la marche arrière (10).

8. Dispositif selon l'une des revendications 1 à 6,
   **caractérisé en ce que**
   l'installation d'avertissement (14, 15) est activée au cours des manoeuvres de sortie de l'emplacement de stationnement lorsque le moteur est mis en marche et que le véhicule (1) est encore à l'arrêt.

9. Dispositif selon l'une des revendications précédentes,
   **caractérisé en ce que**
   l'installation d'avertissement (14, 15) est coupée lors des manoeuvres de sortie d'emplacement de stationnement par une installation de commande actionnée par le conducteur, par une coupure provisoire jusqu'à la nouvelle utilisation de cette fonction.

10. Dispositif selon l'une des revendications précédentes,
    **caractérisé en ce que**
    le conducteur est informé par une installation d'affichage (14) que le dispositif est toujours activé.

11. Dispositif selon l'une des revendications précédentes,
    **caractérisé en ce qu'**
    un signal d'avertissement est émis si la vitesse (ve) du propre véhicule (1) dépasse un seuil de vitesse prédéfini (Vmax).

12. Dispositif selon l'une des revendications précédentes,
    **caractérisé en ce que**
    l'installation d'exploitation (7) émet un signal avertisseur à destination du conducteur par un moyen optique (14) et/ou un moyen acoustique (15).

# Fig. 1

Fig. 2

Start

Einlesen der eigenen
Geschwindigkeit $v_e$ —— 17

Einlesen des
Abstandes $d_n$ —— 18

Berechnung
Relativgeschwindigkeit —— 19

$$v_{rel} = \frac{d_n - d_n - 1}{\Delta t}$$

Berechnung modifizierte
Relativgeschwindigkeit —— 20
$$v_{relmod} = v_{rel} - v_e$$

Berechnung Abstand e —— 21

$$e = \frac{d_n}{v_e} \cdot \sqrt{v_e^2 - v_{relmod}^2}$$

Fig. 3

—— 22

$v_e > v_{max}$?     ja

nein

24

Berechnung Gefahrenmaß G
$$G = f(d_n, v_{relmod}, v_e)$$

23

Ausgabe Fahrerwarnung,
dass $v_e$ zu groß

Ausgabe akustischer / optischer
Fahrerwarnung in Abhängigkeit —— 25
des Gefahrenmaßes G

Ende

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4228794 A1
- DE 19526452 C1
- US 5754123 A
- US 5572484 A

- US 5777563 A
- US 5450057 A
- DE 10160299 A1

**In der Beschreibung aufgeführte Nicht-Patentliteratur**

- Autoelektrik, Autoelektronik. Vieweg-Verlag, 1998, 283-285